Europäisches Patentamt

European Patent Office

Office européen des brevets

(19)

(11) **EP 1 517 540 A2**

(12) **EUROPEAN PATENT APPLICATION**

(43) Date of publication:
**23.03.2005 Bulletin 2005/12**

(51) Int Cl.$^7$: **H04N 1/60**, H04N 1/64

(21) Application number: **04078296.3**

(22) Date of filing: **29.05.2001**

<table>
<tr>
<td>

(84) Designated Contracting States:
**AT BE CH CY DE DK ES FI FR GB GR IE IT LI LU MC NL PT SE TR**
Designated Extension States:
**AL LV MK RO SI**

(30) Priority: **26.05.2000 KR 2000028759**
         **26.10.2000 KR 2000063163**

(62) Document number(s) of the earlier application(s) in accordance with Art. 76 EPC:
**01304696.6 / 1 176 804**

(71) Applicant: **LG ELECTRONICS INC.**
**Seoul (KR)**

</td>
<td>

(72) Inventors:
• **Lee, Jin Soo**
  **Songpa-gu Seoul (KR)**
• **Kim, Heon Jun**
  **Pundang-gu, Songnam-shi Kyonggi-do (KR)**

(74) Representative: **Palmer, Jonathan Richard et al**
**Boult Wade Tennant,**
**Verulam Gardens,**
**70 Gray's Inn Road**
**London WC1X 8BT (GB)**

Remarks:
This application was filed on 06 - 12 - 2004 as a divisional application to the application mentioned under INID code 62.

</td>
</tr>
</table>

(54) **Multimedia searching method using color quantization based on an HMMD color space**

(57)    Described is a color quantization method based on an HMMD color space and a multimedia searching method using the same in extracting color features for searching multimedia, thereby enabling to search multimedia data which are quantized on different levels. A quantization method is optimized to be proper for various quantization levels so as to increase search performance in an HMMD color space. And, interoperability between color features quantized into different quantization levels is provided so as to search multimedia generated from different application programs and in which a quantization rule is defined so as to maintain high search performance. Namely, the present invention provides a color quantization method for various levels, thereby enabling to achieve high search performance on maintaining interoperability. And, the present invention provides a multimedia search method enabling to measure the similarity between features quantized into different levels.

**EP 1 517 540 A2**

**Description**

**BACKGROUND OF THE INVENTION**

**1.Field of the Invention**

The present invention relates to a color quantization method based on an HMMD color space and a multimedia searching method using the same in extracting color features for searching multimedia, thereby enabling to search multimedia data which are quantized on different levels.

**2.Description of the Related Art**

There are new technologies for searching multimedia based on information. Many efforts are made to study multimedia features on which search performance greatly depends.

Search engines generally use global and local color information and texture information for image search. And, it is known that color information plays a great role in image search.

Eventually, more effective color features are being developed and many efforts are made to develop color spaces effective for search.

Color information includes various feature information such as color histogram, local representative color and the like. Thus, search performance greatly depends how to quantize the colors.

It is difficult to show a number of color species when color distribution is represented on a color space. Therefore, color quantization is required for representing a color information with the limited number colors by combining similar color groups into a single color table.

For instance, in the case of a color histogram in a RGB color space, a RGB element is represented by a numerical character which ranges 0 to 255. Thus, color classes amount to $256^3$, which is unrealistic to be represented by color histograms constituted with $256^3$ bins.

Therefore, a single color label is given to consider similar colors one color by grouping them.

For the color labeling, a color space is divided into partial spaces amounting to the number of colors to be represented, in which the division method is called a color quantization method.

There are many factors influencing search performance for the multimedia search using colors. First, it is important for a color space to represent colors well. Second, it is important how to divide the given color space because color features of data is well or wrongfully represented in accordance with the color quantization method.

Thus, the color quantization method should be proper for high search performance.

Considered for color quantization is the fact that it is unable to compare color informations which are resulted from different quantization methods.

All the related arts are unable to consider the above fact since the searching is carried on local data bases.

Namely, studies for carrying out comparative search on the color informations extracted by the same quantization method are reported on the assumption that quantization is achieved by the same quantization method.

As internet technology is massively developed lately, it is demanded that data should be searched regardless of different data management servers. Therefore, important are functions enabling to compare and search multimedia data reciprocally regardless of the locations and servers of the data.

To meet the demands, the proper quantization method should be considered as well as search algorithms for reciprocal comparison should be provided. Such a property is called interoperability.

**SUMMARY OF THE INVENTION**

First of all, terminologies for explaining the present invention are summarized as follows.

(a) Color quantization level

The number of colors represented by an arbitrary color space is infinite.

The number of colors represented in a computer by an RGB color space of 256 dimensions amounts to $256^3$ (16777216).

In order to reduce the number of colors represented for searching multimedia based on colors, color labels are allocated by grouping the represented colors into N of a natural number. In this case, the number of color groups is called a color quantization number.

(b) Interoperability

Information is changed in accordance with the quantization method even though color features of multimedia are extracted using the same color space.

Especially, it is very difficult to measure the similarity between two images using image features which are quantized into different quantization levels, which is because the meanings of the color lables represented in the features are different as well as their relations are hardly described.

For example, one color histogram is constituted with 32 bins by quantizing one data into 32 levels, while the other histogram is constituted with 64 bins by quantizing the other data into 64 levels. For measuring the similarity using the color histograms, first to know is which respective bins of the first histogram corresponds to predetermined bins of the second histogram. Yet, if the quantization is carried out by an arbitrary method, it is very difficult to define the relation of the bins.

On the other hand, if the quantization is carried out under some rules, it is able to describe the relation of the color labels represented by two features in spite of the application of different quantization levels. Thus, the comparison of similarity is possible.

For example, if the space quantized into 32 levels is divided into a pair of separate spaces so as to provide 64 levels, the respective bins represented by 64 levels are able to calculate the inclusive relation with ease so as to be mapped into one of the 32 levels.

Such a property enabling to process the comparison despite the different quantization methods is interoperability.

(c) HMMD color space

The HMMD color space is disclosed in a Korean Patent Appl. No. 98-15326(title of the invention: color coordination space structure and color quantization method using the color coordination) filed 1998. April. 29 by the same inventor of the present invention.

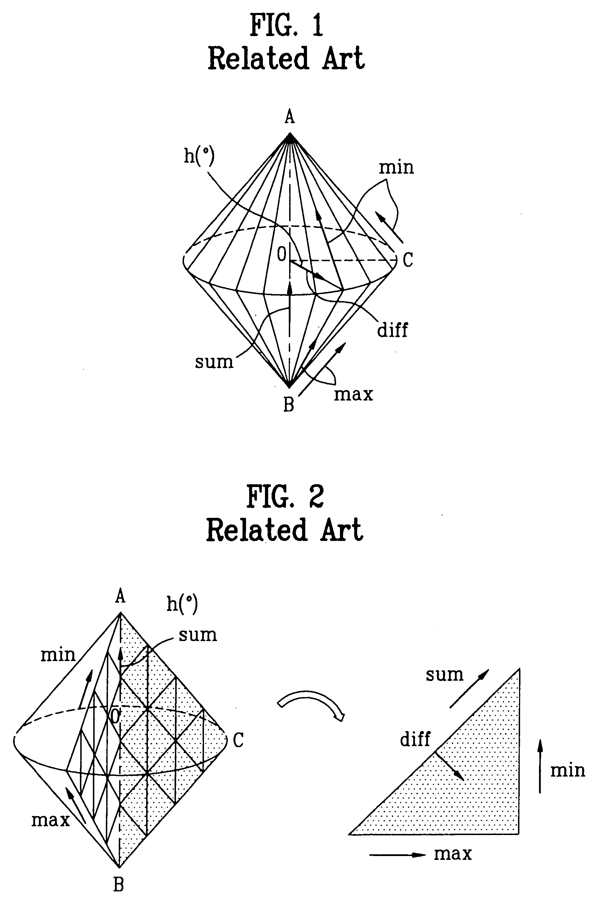

The HMMD color space having a shape of a pair of double corns of which bottoms are overlapped face to face, as shown in Fig. 1, contains 5 parameters.

The 5 parameters consist of hue, max, min, diff(differential value), and sum, which mean hue, shade, tint, chroma, and brightness respectively.

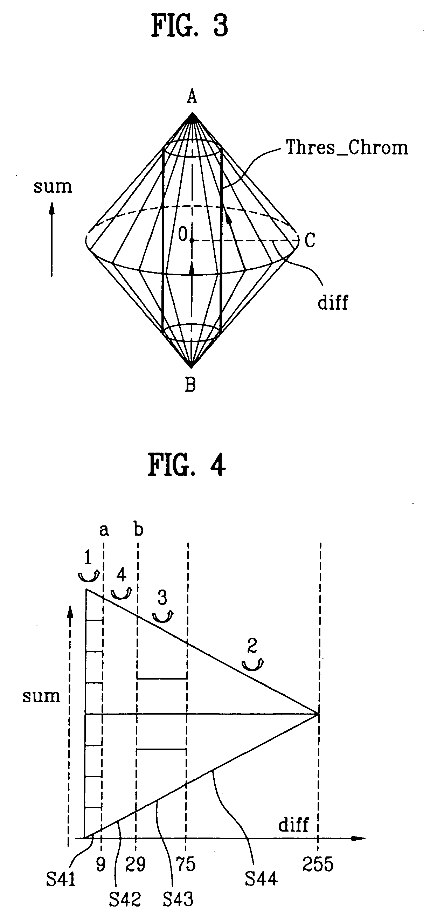

Fig. 2 shows an internal cross-sectional view of the structure of the HMMD color space as shown in Fig. 1.

A vertical axis connecting two confronting vertexes A and B of the symmetrical corns is 'sum'. A varying value by rotating 0° to 360° along a circumference to a perpendicular direction of the vertical axis is 'hue'. A shortest straight line segment from a center O to a maximum circumference C is 'diff. An other shortest straight line segment from the vertex of a lower corn to the maximum circumference C is 'max'. And, another shortest straight line segment from a minimum circumference to the vertex A of an upper corn means 'min'.

The 5 parameters, hue, max, min, diff, and sum are attained from 3 parameters, r, g, and b of an RGB color space as follows. In this case, hue varies 0 to 360.

$$max = max(r, g, b)$$

$$min = min(r,g,b)$$

$$diff = max(r,g,b)-min(r,g,b)$$

$$sum = ( max(r,g,b)-min(r,g,b) ) / 2$$

if max(r,g,b) = min(r,g,b)

hue = UNDEFINED;

else if r = max(r,g,b) & (g-b ≥0) hue = (g-b)*60 / (max(r,g,b)- min(r,g,b));

else if r = max(r,g,b) & (g-b < 0)   hue = 360 + (g-b)*60 / (max(r,g,b)- min(r,g,b));

else if g = max              hue = 120 + (b-r)*60/(max(r,g,b) - min(r,g,b));

else                        hue = 240 + (r-g)*60/(max(r,g,b)  min(r,g,b));

Accordingly, the present invention is directed to a color quantization method based on an HMMD color space and multimedia searching method using the same that substantially obviates one or more of the problems due to limitations and disadvantages of the related art.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages, and in accordance with the purpose of the present invention as embodied and broadly described, a color quantization method based on an HMMD color space in a search system using color informations in the HMMD color space according to the present invention includes the steps of dividing firstly the color space using at least one arbitrarily-designated diff value in use of a differential value(diff) as an axis, dividing a lowest diff region of divided regions of the color space into N equal parts by taking sum as a reference regardless of hue wherein the lowest diff region is a gray region and wherein N is a natural number, and dividing the rest divided regions into equal parts by given respective constants by taking a sum axis and a hue axis as references, respectively.

Preferably, the diff values for dividing firstly the color space centering around the diff axis are determined such that small width is designated to low chroma(low diff region), and vice versa.

And, a longer sum width (a) is selected from both end sum widths (a,b) to be used as a reference when partial parts divided by the determined diff values are divided into equal parts by respective given constants by taking the sum axis as a reference.

And, the respective regions are divided into N equal parts from a red color, namely 0°, by taking the hue axis as a reference.

In another aspect, a color quantization method based on an HMMD color space in an image search system using color informations in the HMMD color space according to the present invention includes the steps of dividing the color space first by taking at least one designated diff value as a reference, and dividing the respective divided regions into $2^x$ equal parts by taking a sum axis as a reference and $2^y$ equal parts by taking a hue axis as a reference wherein x and y are integer.

In a further aspect, a color quantization method based on an HMMD color space in an image search system using color informations in the HMMD color space so as to maintain interoperability between features produced by color quantization for different levels includes a step (a) of dividing the color space into a reference level by carrying out a color quantization of the reference level using diff, sum, and hue, and a step (b) of carrying out another color quantization of a larger level by subdividing at least one of the respective partial regions having been divided by the color quantization of the step (a) by taking at least one combination out of diff, sum, hue, min, and max as a reference.

In a further aspect, a color quantization method based on an HMMD color space in an image search system using color informations in the HMMD color space according to the present invention includes a step (a) of dividing the color space into a reference level by carrying out a color quantization of the reference level using diff, sum, and hue, and a step (b) of carrying out another color quantization of a smaller level by merging at least one of the respective regions having been divided by the color quantization of the step (a).

In an other further aspect, a multimedia searching method using color features quantized by a different-level color quantization method includes a step (a) of mapping meanings of color labels of two features produced by different quantization methods by mapping the color label of the feature produced by the quantization method for a large level to one of the color labels produced by the quantization method for a small level, a step (b) of measuring similarity using the mapped color label, and a step (c) of outputting multimedia data by taking the measured similarity as a reference.

Preferably, the mapped color label, in the step (a), is determined provided that an arbitrary point at the corresponding partial regions of the color label produced by the quantization method for a large level is included in one of the respective regions corresponding to the color labels produced by the quantization method for a small level to be mapped.

And, the color label mapping in the step (a) is executed at a time point initiating to compare the similarity of two initial data, wherein a mapping relation of the color labels according to the two quantization methods is stored as a table for and the like, and wherein the stored relation table information is used for following data without further execution of another color label mapping.

An advantage of the present invention is the provision of a color quantization method based on an HMMD color space and a multimedia searching method using the same, in which a quantization method is optimized to be proper for various quantization levels so as to increase search performance in an HMMD color space.

An advantage of the present invention is the provision of a color quantization method based on an HMMD color space and a multimedia searching method using the same; in which interoperability between color features quantized into different quantization levels is provided so as to search multimedia generated from different application programs and in which a quantization rule is defined so as to maintain high search performance.

Namely, the present invention provides a color quantization method for various levels, thereby enabling to achieve high search performance on maintaining interoperability. And, the present invention provides a multimedia search method enabling to measure the similarity between features quantized into different levels.

It is to be understood that both the foregoing general description and the following detailed description are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Fig. 1 shows a structure of a HMMD color space according to the present invention;

Fig. 2 shows a cross-sectional view of the structure of the HMMD color space as shown in Fig. 1;

Fig. 3 shows a state of dividing a gray region in a HMMD color space;

Fig. 4 shows an MMD cross-sectional view of an HMMD color space in a 32-level quantization method according to the present invention;

Fig. 5 shows an MMD cross-sectional view of an HMMD color space in a 64-level quantization method according to the present invention;

Fig. 6 shows an MMD cross-sectional view of an HMMD color space in a 120-level quantization method according to the present invention;

Fig. 7 shows an MMD cross-sectional view of an HMMD color space in a 184-level quantization method according to the present invention;

Fig. 8 shows MMD cross-sectional views in HMMD color spaces for illustrating a color label mapping relation between 184 and 64 levels;

Fig. 9 is a flowchart for the execution sequence of a color mapping method;

Fig. 10A shows a cross-sectional view of a HMMD color space by taking hue as a reference;

Fig. 10B shows a quantization process taking hue as a reference;

Fig. 11 shows search performance by the respective quantization levels according to the present invention;

Fig. 12 shows interoperability search performance according to the present invention;

Fig. 13 shows an MMD cross-sectional view of an HMMD color space in a 256-level quantization method according to another embodiment of the present invention;

Fig. 14 shows an MMD cross-sectional view of an HMMD color space in a 128-level quantization method according to another embodiment of the present invention;

Fig. 15 shows an MMD cross-sectional view of an HMMD color space in a 64-level quantization method according to another embodiment of the present invention;

Fig. 16 shows an MMD cross-sectional view of an HMMD color space in a 32-level quantization method according to another embodiment of the present invention;

Fig. 17 shows search performance by the respective quantization levels according to another embodiment of the present invention; and

Fig. 18 shows interoperability search performance according to another embodiment of the present invention.

## DESCRIPTION OF THE PREFERRED EMBODIMENTS

Reference will now be made in detail to the preferred embodiments of the present invention, examples of which are illustrated in the accompanying drawings. Where possible, the same reference numerals will be used to illustrate like elements throughout the specification.

In the present invention, it is intended that an HMMD color space, which has an excellent inter-operable property and is good for search, is quantized to be fit for image search most effectively.

Fig. 3 shows a state of dividing a gray region in a HMMD color space.

In the present invention, an HMMD color space is divided first by diff. And, a region having a diff value under a predetermined critical value Thres_Chrom, as shown in Fig. 3, is a gray region of which color is unable to be discerned by hue.

As brightness works only for discerning colors belonging to the gray region, this region is divided by taking sum corresponding to brightness as a reference.

## Embodiment 1

Fig. 4 shows an MMD cross-sectional view of an HMMD color space in a basic 32-level quantization method according to the present invention.

When a diff value lies between 0 and 255, the color space is divided into four partial regions by taking diff values of 9, 29, and 75 as references. And, let us assum that the partial regions are designated by S41, S42, S43, and S44, respectively.

In this case, as shown in Fig.3, 'S41' is the region having the lowest diff value, i.e. the gray region of which chroma is the lowest. Thus, the partial region S41 is divided into 8 equal parts using brightness, i.e. sum as a reference instead of hue.

'S42' is divided into 4 equal parts by taking hue as a reference, and each of the 4 equal parts is divided into 2 equal parts again by taking sum as a reference. 'S43' is divided into 3 equal parts by taking hue as a reference, and each of the 3 equal parts is divided into 4 equal parts again by taking sum as a reference. 'S44' is divided into 2 equal parts repeatedly by taking hue and sum as references respectively.

In the partial regions S42 and S43, the HMMD color space is divided into equal parts by taking hue as a reference and then, the other division into equal parts is carried out by taking sum as a reference, and vice versa. Namely, in the partial regions S42 and S43, the divisions are carried out in random order. This relation is applied to all the divisions of arbitrary regions by taking sum and hue as references.

A wider sum width a rather than a narrower width b in both end sum widths in the divided regions is taken as a reference when taking sum as a reference, which is also applied to the divisions into equal parts by the given constants in the regions divided by the diff values when taking sum as a reference.

When a region having a less chroma, i.e. a low diff value is divided by diff, the division by diff, as shown in the drawing, results in narrow regions. Thus, discerning capability by colors is effectively enforced because most of pixel colors constituting data are concentrated on a chroma region having a middle value in accordance with the data characteristics.

To the same effect, when quantization is carried out with the small number such as 32 levels, the division by hue is carried out more finely compared to that of a high chroma region so as to divide a low chroma region into smaller partial regions. Therefore, the regions are effectively represented by using a color of less level.

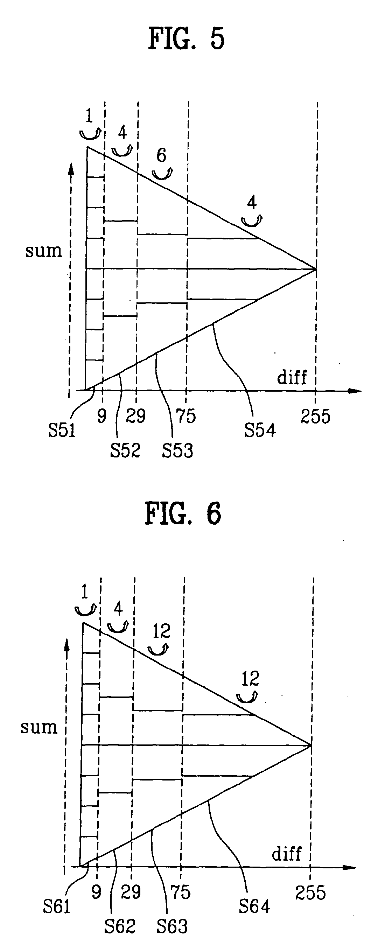

Fig. 5 shows an MMD cross-sectional view of an HMMD color space in a 64-level quantization method according to the present invention.

The color space is divided into four partial regions by taking diff values of 9, 29, and 75 in a diff axis as references. And, it is assumed that the partial regions are designated by S51, S52, S53, and S54, respectively.

In this case, as shown in Fig. 3, 'S51' is the region having the lowest diff value, i.e. the gray region of which chroma is the lowest. Thus, the partial region S51 is divided into 8 equal parts using brightness, i.e. sum as a reference instead of hue.

'S52' is divided into 4 equal parts by taking hue as a reference and 4 equal parts be taking sum as a reference. 'S53' is divided into 6 equal parts by taking hue as a reference and 4 equal parts by taking sum as a reference. And, 'S54' is divided into 4 equal parts repeatedly by taking hue and sum as references respectively.

Therefore, the sixty four divided regions are completely included in one of the thirty two divided regions in Fig. 4.

Namely, the divisional boundaries of the thirty two divided regions coincide perfectly with those of the sixty four divided regions. When the similarity between data represented by 32-level color divided in Fig. 4 and the other data represented by 64-level color divided in Fig. 5 is measured, color labels of small levels are used for the consistency despite using different color labels.

Thus, it is able to transform the color information quantized into 64 levels into the other color form quantized into 32 levels.

The measurement of data similarity differs in accordance with the characteristics of the color information, which is applied to image search using color histograms as color informations in the embodiment of the present invention.

A color histogram is an information meaning the color distribution through entire image pixels.

To seek the color histogram, it is first calculated that the color values of the respective pixels in an image are belonged to certain divided spaces when an HMMD color space is divided by the given quantization method. Then, the distributions are recorded in the histogram bins having the corresponding color labels of the respective divided spaces.

The method of searching an image using such color histograms is carried out by measuring the similarity between a color histogram of a reference image and another color histogram of a target image. In this case, the similarity is attained by the following formula 1.

[ Formula 1]

$$\sum_{i=0}^{i=n}\left|(H\gamma[i] - Ht[i]\right|$$

  n : the number of bins of histogram
  Hr[i] : ith bin value of a histogram of a reference image
  Ht[i] : ith bin value of a histogram of a target image

The respective bin values of the histogram representing a general distribution are fractions.

In order to reduce the storage space of a histogram when putting a theory into practice, the fractional values are quantized to be represented by a space under one byte instead of using all the four bytes which are generally used for representing the fraction.

In the embodiment of the present invention, the respective fractional values are represented by 8 bits, i.e. 1 byte, for which a fractional value is quantized into 0 to 255 values.

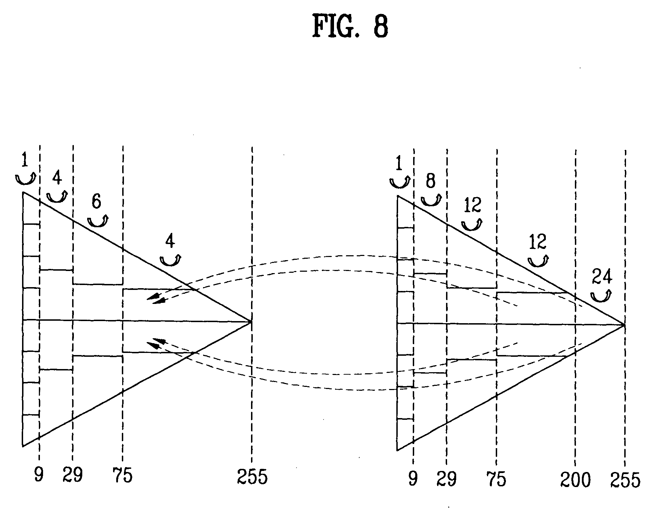

Fig. 8 shows MMD cross-sectional views in HMMD color spaces for illustrating a color label mapping relation between 184 and 64 levels, wherein the finely-divided regions are able to be mapped directly into a roughly-divided regions.

A mapping method is to transform a color label of a color information, which is quantized into a larger level in color information quantized by different quantization methods, into another color label of another color information quantized into a small level. For this transformation, sought is a new color label of an arbitrary point included in the respective divided regions of the color information which is quantized into a large level using a quantization method of a corresponding small level. Then, the transformation is executed in accordance with the new color label.

Another method for color mapping is carried out by mapping a quantized color label from a larger level to a small level. An arbitrary point in the respective regions quantized into large levels has to be included in one of the other regions quantized into small levels. Therefore, mapping is completed in a manner that the arbitrary point is transformed into the level of the corresponding inclusive region.

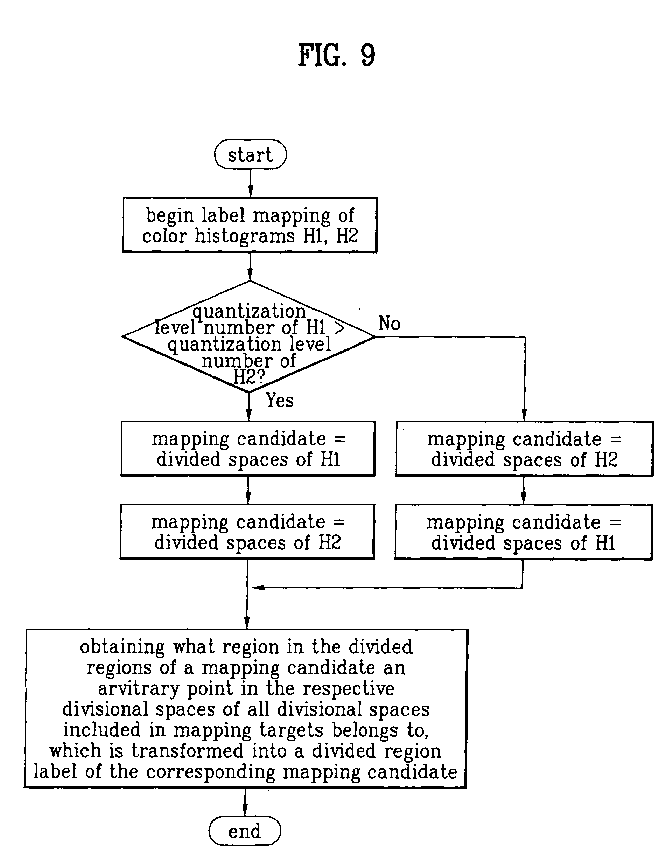

Such a mapping process is illustrated by a flowchart in Fig. 9.

Having the merit of fast mapping and transformation of color labels, the first-described method is used when two different quantization formulae are known in general.

On the other hand, when the quantization formulae are not known but the information of divided regions in a color space meant by the respective color labels is known, the second-described method may be used.

It is unnecessary for the color mapping to be executed on every comparison of two data. When a similar data is generally searched in a specific data base by referring to a specific data, a color information may be extracted using the same quantization method in one data base. Thus, if the color information quantization method for a reference data is different from that for a data belonging to the data base, the above-described color mapping is applied once.

After the relation between two color labels is stored in a table during the first mapping process, the mapping is directly executed using the relation stored in the table.

Hence, it is able to reduce the time taken for the color mapping.

Fig. 6 shows an MMD cross-sectional view of an HMMD color space in a 120-level quantization method according to the present invention.

The color space is divided into four partial regions by taking diff values of 9, 29, and 75 in a diff axis as references. And, it is assumed that the partial regions are designated by S61, S62, S63, and S64, respectively.

And, as shown in Fig. 3, 'S61' is the region having the lowest diff value, i.e. the gray region of which chroma is the lowest. Thus, the partial region S61 is divided into 8 equal parts using brightness, i.e. sum as a reference instead of hue.

'S62' is divided into 4 equal parts by taking hue as a reference, and divided again into 4 equal parts by taking sum as a reference.

'S63' is divided into 12 equal parts by taking hue as a reference, and divided again into 4 equal parts by taking sum as a reference.

And, 'S64' is divided into 12 equal parts by taking hue as a reference, and divided again into 4 equal parts by taking sum as a reference.

Therefore, the 120 divided regions are completely included in one of the 64 divided regions in Fig. 5.

Namely, the color space is constituted by dividing all the divided regions corresponding to 'S53' in the divided regions into two equal parts respectively by taking hue as a reference and by dividing all the divided regions corresponding to 'S54' into 3 equal parts respectively by taking hue as a reference.

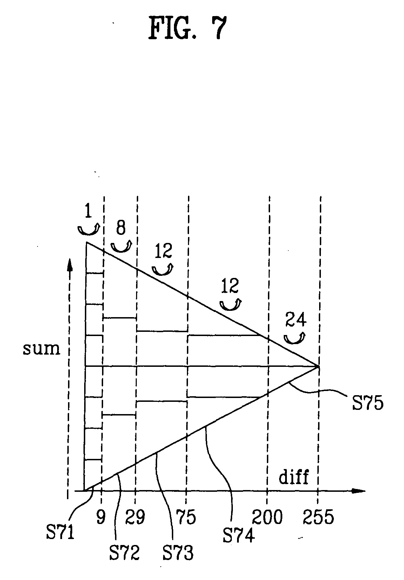

Fig. 7 shows an MMD cross-sectional view of an HMMD color space in a 184-level quantization method according to the present invention.

The color space is divided into five partial regions by taking diff values of 9, 29, 75, and 200 in a diff axis as references. And, it is assumed that the partial regions are designated by S71, S72, S73, S74, and S75 respectively.

And, as shown in Fig. 3, 'S71' is the region having the lowest diff value, i.e. the gray region of which chroma is the lowest. Thus, the partial region S71 is divided into 8 equal parts using brightness, i.e. sum as a reference instead of hue.

'S72' is divided into 8 equal parts by taking hue as a reference, and divided again into 4 equal parts by taking sum as a reference.

'S73' is divided into 12 equal parts by taking hue as a reference, and divided again into 4 equal parts by taking sum as a reference.

'S74' is divided into 12 equal parts by taking hue as a reference, and divided again into 4 equal parts by taking sum as a reference.

And, 'S75' is divided into 24 equal parts by taking hue as a reference, and divided again into 2 equal parts by taking sum as a reference.

Therefore, the 184 divided regions are completely included in one of the 120 divided regions in Fig. 6.

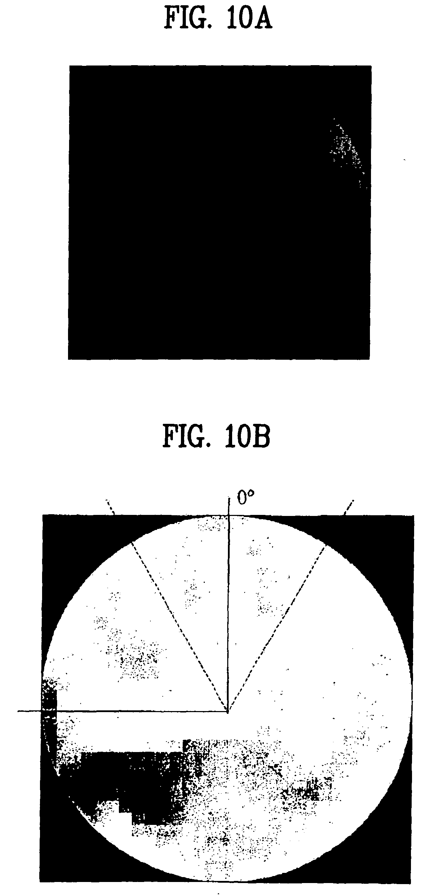

Fig. 10A shows a cross-sectional view of a HMMD color space by taking hue as a reference, and Fig. 10B shows a quantization process taking hue as a reference wherein the division is processed on a hue plane by taking 0° as a reference.

Referring to Fig. 10A and Fig. 10B, it seems visually like a dotted line that an interval between -45 ° and +45 ° may be regarded as a proper red region. Yet, it is advantageous that an interval between 0° and 90 ° is divided as one region like a solid line when search is going on.

In data characteristics, a dark color of red series is widely used to represent a shade region of one object area. In this case, the red color is applied uniformly to a combination of either red/green components or red/blue components in a data.

Namely, it is very uncommon that a dark color is represented in a data by both combinations of the red and green components and the red and blue components, which is caused by the characteristics of multimedia data encoding or image acquisition apparatuses.

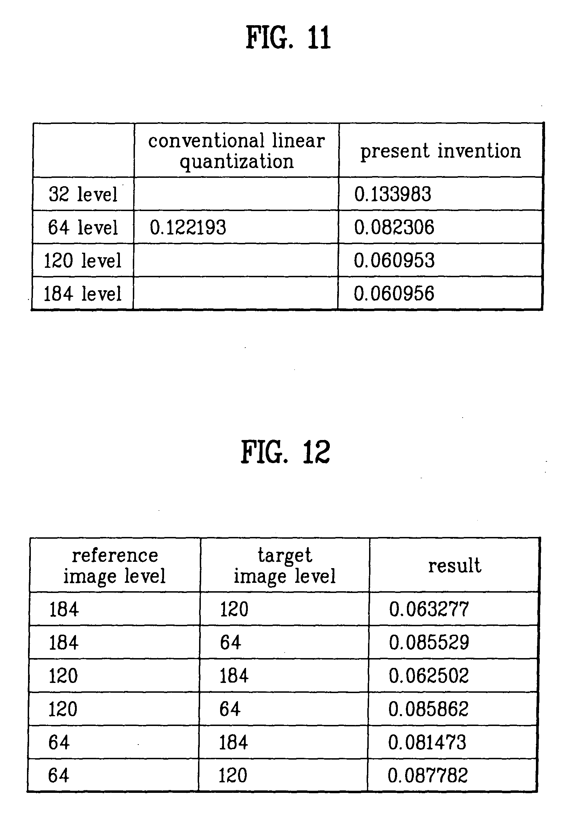

Fig. 11 shows a table of the result of searching images using the respective quantization methods according to the first embodiment of the present invention.

The smaller the numbers in the drawing becomes(closer to '0'), the higher the search result becomes. This is proportional to the error size.

As shown in the table, compared to a conventional linear quantization method, the present invention provides excellent search performance which becomes higher by the increase of level number.

Fig. 12 shows a table of search result by calculating the similarity between features extracted with different quantization levels using the respective quantization methods according to the first embodiment of the present invention.

Referring to Fig. 12, high search performance is resulted from the interoperability test between different quantization levels.

When the data quantized into different levels are searched, the search performance of the lowest level quantization is guaranteed at least by the interoperability.

Although the search performance has to be equal to the search result of the low level in a reference image level and a target image level, little difference occurs practically during operation due to hardware and the like.

For instance, when the reference image level and the target image level are attained by being quantized into 120 and 64 levels respectively, the search performance should have resulted in 64 levels ideally as shown in Fig. 11. Yet, the search performance result shows the result in Fig. 12 practically.

In the first embodiment of the present invention, the diff values used for color quantization and the adjunctive predetermined constants dividing the respective regions are the values resulted from the experiments for providing the best search performance. When images color-quantized by the different quantization methods are searched, the reference color quantization level and the other color quantization level used subsequently to divide more minutely the quantized color regions are attained by using the result values of the experiments.

The result of the present invention guarantees high search performance at all times, thereby enabling to search all the multimedia data existing regardless of time and places.

## Embodiment 2

In a second embodiment of the present invention, diff values are introduced to represent color quantization levels by $2^x$ such as 256, 128, 64, and 32. Then, partial regions are divided by taking the levels as references so that search can be processed in the different quantization levels respectively.

In an image search system using color informations in an HMMD color space, a color quantization method based on an HMMD color space according to the second embodiment of the present invention includes the steps of dividing the color space first by taking at least one predetermined diff value as a reference when a differential value diff lies between 0 and 255, and dividing diff regions into $2^x$ equal parts by taking sum as a reference and $2^y$ equal parts by taking hue as a reference wherein x and y are integer.

In the second embodiment of the present invention, when diff is represented by the number between 0 and 255, diff values are established as 6, 20, 60, and 110 to divide the color space along a diff axis. Then, the color space is divided into 5 partial regions by taking the diff values as references. And, it is assumed that the divided partial regions are S1, S2, S3, S4, and S5 respectively. The respective divides regions S1, S2, S3, S4, and S5 are divided into $2^x$ equal parts by taking sum as a reference and $2^y$ equal parts by taking hue as a reference, thereby dividing the color space region into various regions consisting of various levels.

In this case, if the regions S1, S2, S3, S4, and S5 divided along the diff axis are equal and are further divided into predetermined number, which satisfies positive numbers of exponents to 2 i.e. $2^x$ and $2^y$, equal parts, it is always possible to search by transforming the region into one of 256/128/64/32 level quantizations.

Reference will now be made in detail to the second embodiment of the present invention, examples of which are illustrated in the accompanying drawings.

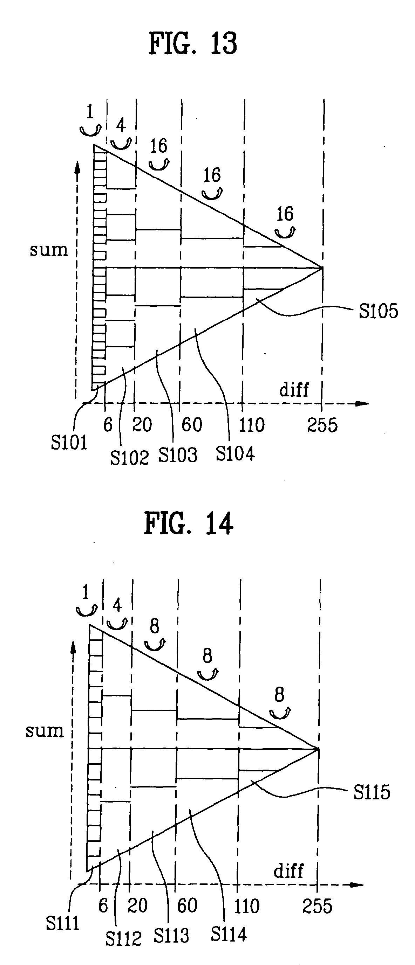

Fig. 13 shows an MMD cross-sectional view of an HMMD color space in a 256-level quantization method according to a second embodiment of the present invention.

The color space is first divided into five partial regions by taking diff values of 6, 20, 60, and 110 as references when a color quantization level to be divided is 256. And, it is assumed that the partial regions are designated by S101, S 102, S 103, S104, and S105 respectively. And, the partial regions S101 to S105 are divided into equal parts by taking sum and hue axes as references to satisfy positive numbers of exponents to 2 respectively.

Namely, the region S101 is divided into 32 equal parts by taking the sum axis as a reference, thereby providing 32 partial regions.

'S102' is divided into 8 equal parts by taking the sum axis as a reference and again into 4 equal parts by taking the hue axis as a reference, thereby being divided into 32 partial regions.

'S103' is divided into 4 equal parts by taking the sum axis as a reference and again into 16 equal parts by taking the hue axis as a reference, thereby being divided into 64 partial regions.

'S104' is divided into 4 equal parts by taking the sum axis as a reference and again into 16 equal parts by taking the hue axis as a reference, thereby being divided into 64 partial regions.

'S105' is divided into 4 equal parts by taking the sum axis as a reference and again into 16 equal parts by taking the hue axis as a reference, thereby being divided into 64 partial regions.

Accordingly, the color space is divided into 256 partial regions, i.e. 256 levels.

Fig. 14 shows an MMD cross-sectional view of an HMMD color space in a 128-level quantization method according to a second embodiment of the present invention.

The color space is first divided into five partial regions by taking diff values of 6, 20, 60, and 110 as references when a color quantization level to be divided is 128. And, it is assumed that the partial regions are designated by S111, S 112, S113, S114, and S115 respectively. And, the partial regions S111 to S115 are divided into equal parts by taking sum and hue axes as references to satisfy positive numbers of exponents to 2 respectively.

Namely, the region S111 is divided into 16 equal parts by taking the sum axis as a reference, thereby providing 16 partial regions.

'S112' is divided into 4 equal parts by taking the sum axis as a reference and again into 4 equal parts by taking the hue axis as a reference, thereby being divided into 16 partial regions.

'S113' is divided into 4 equal parts by taking the sum axis as a reference and again into 8 equal parts by taking the hue axis as a reference, thereby being divided into 32 partial regions.

'S 114' is divided into 4 equal parts by taking the sum axis as a reference and again into 8 equal parts by taking the hue axis as a reference, thereby being divided into 32 partial regions.

'S 115' is divided into 4 equal parts by taking the sum axis as a reference and again into 8 equal parts by taking the hue axis as a reference, thereby being divided into 32 partial regions.

Accordingly, the color space is divided into 128 partial regions.

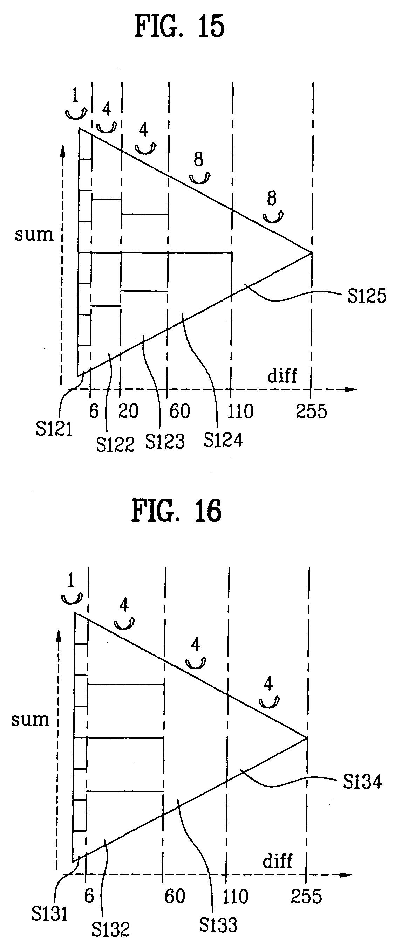

Fig. 15 shows an MMD cross-sectional view of an HMMD color space in a 64-level quantization method according to a second embodiment of the present invention.

The color space is first divided into five partial regions by taking diff values of 6, 20, 60, and 110 as references when a color quantization level to be divided is 64. And, it is assumed that the partial regions are designated by S121, S122, S123, S124, and S125 respectively. And, the partial regions S121 to S125 are divided into equal parts by taking sum and hue axes as references to satisfy positive numbers of exponents to 2 respectively.

Namely, the region S121 is divided into 8 equal parts by taking the sum axis as a reference, thereby providing 8 partial regions.

'S122' is divided into 4 equal parts by taking the sum axis as a reference and again into 4 equal parts by taking the hue axis as a reference, thereby being divided into 16 partial regions.

'S123' is divided into 4 equal parts by taking the sum axis as a reference and again into 4 equal parts by taking the hue axis as a reference, thereby being divided into 16 partial regions.

'S 124' is divided into 2 equal parts by taking the sum axis as a reference and again into 8 equal parts by taking the hue axis as a reference, thereby being divided into 16 partial regions.

'S125' is divided into 8 equal parts by taking the hue axis as a reference, thereby being divided into 8 partial regions.

Accordingly, the color space is divided into 64 partial regions.

Fig. 16 shows an MMD cross-sectional view of an HMMD color space in a 32-level quantization method according to a second embodiment of the present invention.

The color space is first divided into five partial regions by taking diff values of 6, 60 and 110 in a diff axis as references when a color quantization level to be divided is 32. And, it is assumed that the partial regions are designated by S131, S 132, S 133, and S 134 respectively. And, the partial regions S131 to S 134 are divided into equal parts by taking sum and hue axes as references to satisfy positive numbers of exponents to 2 respectively.

Namely, the region S131 is divided into 8 equal parts by taking the sum axis as a reference, thereby providing 8 partial regions.

'S132' is divided into 4 equal parts by taking the sum axis as a reference and again into 4 equal parts by taking the hue axis as a reference, thereby being divided into 16 partial regions.

'S 133' is divided into 4 equal parts by taking the hue axis as a reference, thereby being divided into 4 partial regions.

'S134' is divided into 4 equal parts by taking the hue axis as a reference, thereby being divided into 4 partial regions.

Accordingly, the color space is divided into 32 partial regions, i.e. 32 levels.

As described in the foregoing explanation, the region, which has the lowest diff value, i.e. the gray region of which chroma is the lowest, is not divided. And, the division is carried out only using brightness, i.e. sum as a reference.

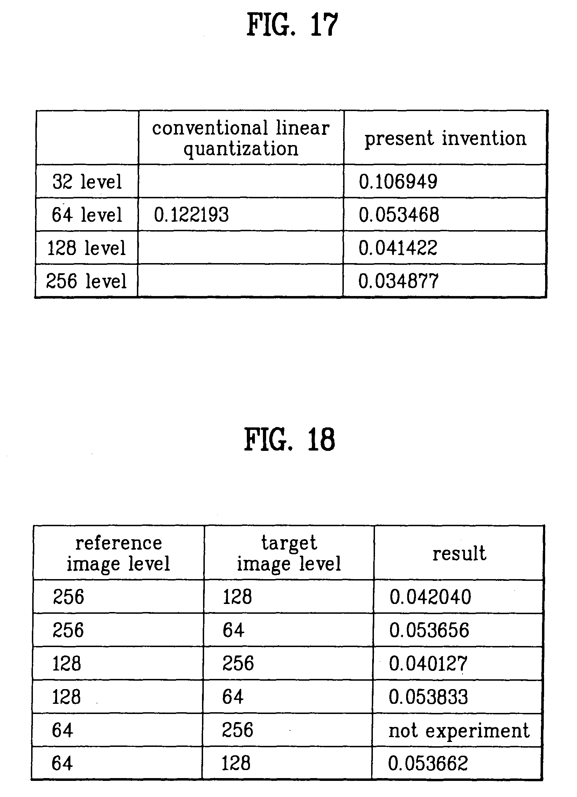

Fig. 17 shows a table of the result of searching images using the respective quantization methods according to the second embodiment of the present invention.

And, Fig. 18 shows a table of search result by calculating the similarity between features extracted with different quantization levels using the respective quantization methods according to the second embodiment of the present invention.

In the second embodiment of the present invention, the diff values used for color quantization and the adjunctive predetermined constants of exponents to 2 dividing the respective regions are the values resulted from the experiments for providing the best search performance.

In the present invention, the color quantization is processed by carrying out a color quantization for a reference level first. Then, another color quantization for a larger level is carried out by subdividing the respective partial regions having been color-quantized into more minute regions, or other color quantization for a smaller level is carried out by combining the respective partial regions having been color-quantized.

For example, by taking a reference quantization level as 32, the subdivision is carried out on the divided regions generated from the quantization in accordance with the level order from 64, 128, and 256 subsequently. On the other hand, by taking a reference quantization level as 256, the division is carried out on the divided regions generated from the quantization more minutely in accordance with the level order from 128, 64, and 32 subsequently.

The former case of quantizing the partial regions, which have been quantized by a reference level, into a larger level by subdivision includes the first step of dividing the color space into a reference level by carrying out a color quantization of the reference level using diff, sum, and hue, and the second step of carrying out another color quantization of a larger level by subdividing at least one of the respective partial regions having been divided by the color quantization of the first step by taking at least one combination out of diff, sum, hue, min, and max as a reference.

In this case, the reference of the color quantization level is 32, the diff values designated for dividing the color space into the reference level are 6, 60, and 110 respectively when a differential value diff ranges 0 to 255, and the color space is first divided into 4 partial regions by the diff values. It is assumed that the partial regions are S131, S132, S133, and S134. Then, the regions S131 to S134 are divided into positive numbers of exponents to 2 equal parts by taking sum and hue axes as references, thereby dividing the color space into the reference level of 32.

The process of dividing the partial regions S131 to S134 into 32 level is as good as that of the second embodiment for the 32-level quantization method.

In the process of carrying out the color quantization for a larger level from 32 to 64 levels, after the region S132 has been divided again into two partial regions S132-1 and S132-2 by taking the diff value of 20 as a reference, the partial regions S132-1 and S132-2 are divided into 4 equal parts by taking the sum axis as a reference while the quadruply-divided hue axis remains as it is. Thus, the region S132 is divided into 32 partial regions.

The region S131 having been divided into 8 equal parts in 32-level by taking the sum axis as a reference is untouched.

The region S133 is divided into 2 equal parts by taking the sum axis as a reference and the respective divided regions are subdivided into 8 equal parts by taking the hue axis as a reference, thereby being divided into 16 partial regions. Namely, the region S133 was divided into 4 equal parts in 32-level but is divided into 8 equal parts in 64-level.

The region S134, which has been divided into 4 equal parts in 32-level by taking the hue axis as a reference, is divided into 8 equal parts, thereby being divided into 8 partial regions. Thus, the color space is divided into 64 levels from 32.

In the process of carrying out the color quantization for a larger level from 64 to 128 level, the region S131, which has been divided into 8 equal parts in 64-level, is divided into 16 equal parts by taking the sum axis as a reference, thereby being subdivided into 16 partial regions.

The region S132-1, which has been divided into 4 equal parts by taking the sum axis as a reference and 4 equal parts by taking the hue axis as a reference in 64-level, maintains as it is.

The region S 132-2 maintains the state that has been divided into 4 equal parts in 64-level by taking the sum axis as a reference and is divided into 8 equal parts instead of 4 equal parts in 64-level by taking the hue axis as a reference, thereby being subdivided into 32 partial regions.

The region S 133 maintains the state that has been divided into 8 equal parts by taking the hue axis as a reference and is divided into 4 equal parts instead of 2 equal parts in 64-level by taking the sum axis as a reference, thereby being subdivided into 32 partial regions.

The region S 134 maintains the state that has been divided into 8 equal parts and is divided into 4 equal parts by taking the sum axis as a reference, thereby being subdivided into 32 partial regions.

Accordingly, the color space is divided into 128 levels from 64.

In the process of carrying out the color quantization for a larger level from 128 to 256 levels, the region S131, which has been divided into 16 equal parts in 128-level, is divided into 32 equal parts by taking the sum axis as a reference, thereby being subdivided into 32 partial regions.

The region S132-1 maintains the state that has been divided into 4 equal parts by taking the hue axis as a reference and is divided into 8 equal parts instead of 4 equal parts in 128-level by taking the sum axis as a reference, thereby being subdivided into 32 partial regions.

The region S132-2 maintains the state that has been divided into 4 equal parts by taking the sum axis as a reference and is divided into 16 equal parts instead of 8 equal parts in 128-level by taking the hue axis as a reference, thereby being subdivided into 64 partial regions.

The region S133 maintain the state that has been divided into 4 equal parts by taking the sum axis as a reference and is divided into 16 equal parts instead of 8 equal parts in 128-level by taking the hue axis as a reference, thereby being subdivided into 64 partial regions.

The region S134 maintains the state that has been divided into 4 equal parts by taking the sum axis as a reference and is divided into 16 equal parts instead of 8 equal parts in 128-level by taking the hue axis as a reference, thereby being subdivided into 64 partial regions.

Accordingly, the color space is divided into 256 levels from 128.

On the other hand, the latter case of quantizing the partial regions, which have been quantized by a reference level, into a smaller level by mergence includes the first step of dividing the color space into a reference level by carrying out a color quantization of the reference level using diff, sum, and hue, and the second step of carrying out another color quantization of a smaller level by merging at least one of the respective partial regions having been divided by the color quantization of the first step.

In this case, the reference of the color quantization level is 256, the diff values designated for dividing the color space into the reference level are 6, 20, 60, and 110 respectively when a differential value diff ranges 0 to 255, and the color space is first divided into 5 partial regions by the diff values. It is assumed that the partial regions are S101, S 102, S 103, S104, and S105. Then, the regions S101 to S105 are divided into positive numbers of exponents to 2 equal parts by taking sum and hue axes as references, thereby dividing the color space into the reference level of 256.

The process of dividing the partial regions S101 to S105 into 256 levels are as good as the quantization method of 256 levels described in the second embodiment of the present invention.

In the process of carrying out the color quantization for a smaller level from 256 to 128 levels, the region S101 is divided into 16 equal parts instead of 32 equal parts in 256-level by taking the sum axis as a reference, whereby the quantization level of the region S101 is reduced to 16 levels.

The region S102 maintains the state that has been divided into 4 equal parts in 256-level by taking the hue axis as a reference and is divided into 4 equal parts instead of 8 equal parts in 256-level by taking the sum axis as a reference, whereby the quantization level of the region S102 is reduced to 16 levels.

The region S103 maintains the state that has been divided into 4 equal parts in 256-level by taking the sum axis as a reference and is divided into 8 equal parts instead of 16 equal parts in 256-level by taking the hue axis as a reference, whereby the quantization level of the region S103 is reduced to 32 levels.

The region S104 maintains the state that has been divided into 4 equal parts in 256-level by taking the sum axis as a reference and is divided into 8 equal parts instead of 16 equal parts in 256-level by taking the sum axis as a reference, whereby the quantization level of the region S104 is reduced to 32 levels.

The region S105 maintains the state that has been divided into 4 equal parts in 256-level by taking the sum axis as a reference and is divided into 8 equal parts instead of 16 equal parts in 256-level by taking the hue axis as a reference, whereby the quantization level of the region S 105 is reduced to 32 levels.

Accordingly, the color space is divided into 128 levels from 256.

In the process of carrying out the color quantization for a smaller level from 128 to 64 levels, the region S101 is divided into 8 equal parts instead of 16 equal parts in 128-level by taking the sum axis as a reference, whereby the quantization level of the region S101 is reduced to 8 levels.

The region S102 maintains the state that has been divided into 4 equal parts by taking the sum axis as a reference and 4 equal parts by taking the hue axis as a reference.

The region S103 maintains the state that has been divided into 4 equal parts by taking the sum axis as a reference and is divided into 4 equal parts instead of 8 equal parts in 128-level by taking the hue axis as a reference, whereby the quantization level of the region S103 is reduced to 16 levels.

The region S104 maintains the state that has been divided into 8 equal parts by taking the hue axis as a reference and is divided into 2 equal parts instead of 4 equal parts in 128-level by taking the sum axis as a reference, whereby the quantization level of the region S104 is reduced to 16 levels.

The region S105 maintains the state that has been divided into 8 equal parts by taking the hue axis as a reference and is divided into 1 equal part instead of 4 equal parts in 128-level by taking the sum axis as a reference, whereby the quantization level of the region S105 is reduced to 8 levels.

Accordingly, the color space is divided into 64 levels from 128.

In the process of carrying out the color quantization for a smaller level from 64 to 32 levels, the region S101 maintains the state that has been divided into 8 equal parts in 64-level by taking the sum axis as a reference.

The region S102 and the region S103 are merged in a merged region. And, the merged region maintains the state that has been divided into 4 equal parts by taking the hue axis as a reference and is divided into 2 equal parts by taking the sum axis as a reference, whereby the quantization level of the merged region is reduced to 8 levels.

The region S104 maintains the state that has been divided into 1 equal part instead of 2 equal parts in 64-level by taking the sum axis as a reference and is divided into 4 equal part instead of 8 equal parts in 64-level by taking the hue axis as a reference, whereby the quantization level of the region S104 is reduced to 4 levels.

The region S105 maintains the state that has been divided into 1 equal part by taking the sum axis as a reference and is divided into 4 equal parts instead of 8 equal parts in 64-level by taking the hue axis as a reference, whereby the quantization level of the region S105 is reduced to 4 levels.

Accordingly, the color space is divided into 32 levels from 64.

In the second embodiment of the present invention, expandability and search performance are more improved than are in the first embodiment by having the HMMD color space area which is quantized into a quantization level expressed by $2^x$ to be used for search.

As mentioned in the above description, the present invention for multimedia searches such as an image search and the like uses an HMMD color space proper for the search in order to use the most important color informations effectively, and particularly enables to guarantee high search performance in spite of the quantization using small-numbered color levels.

Accordingly, the present invention enables to provide high search performance by standardizing the most optimum color quantization method through the search-related standardization such as MPEG-7 as well as by using less space of features which is required for the search.

Moreover, the present invention enables to provide a multimedia search method based on colors which corresponds with the true standardization and a solution to settle the feature structures by providing a quantization method which guarantees the interoperability enabling to compare and search reciprocally regardless of the different quantization methods applied to various usages.

The foregoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

In a search system using color information in an HMMD color space, embodiments of the invention provide a color quantization method based on the HMMD color space comprising the steps of, dividing firstly the color space using at least one arbitrarily-designed diff value in use of a differential value (diff) as an axis, dividing a lowest diff region of divided regions of the color space into N equal parts by taking sum as a reference regardless of hue wherein the lowest diff region is a gray region and wherein N is a natural number, and, dividing the rest divided regions into equal parts by given respective constants by taking a sum axis and a hue axis as references, respectively.

Preferably, the diff values for dividing firstly the color space centering around the diff axis are determined such that small width is designated to low chroma (low diff region), and vice versa.

Preferably, a longer sum width (a) is selected from both end sum widths (a, b) to be used as a reference when partial parts divided by the determined diff values are divided into equal parts by respective given constants by taking the sum axis as a reference.

Preferably, the respective regions are divided into N equal parts from a red color (namely, 0°) by taking the hue axis as a reference.

Preferably, the respective regions divided by taking the diff axis as a reference are divided again into $2^x$ (x is a positive number) equal parts by taking the sum axis as a reference and $2^y$ (y is a positive number) equal parts by taking the hue axis as a reference.

Preferably, the color space has the diff values ranging 0 to 255, the diff values are established as 6, 20, 60, and 110 to divide the color space along a diff axis, and the color space is divided into 5 regions S101 to S105 by taking the diff values as references, and wherein the color space is divided into 256 partial regions by dividing the region S101 into 32 equal parts by taking the sum axis as a reference so as to provide 32 partial regions, dividing the region S102 into 8 equal parts by taking the sum axis as a reference and again into 4 equal parts by taking the hue axis as a reference so as to provide 32 partial regions, dividing the region S103 into 4 equal parts by taking the sum axis as a reference and again into 16 equal parts by taking the hue axis as a reference so as to provide 64 partial regions, dividing the region S 104 into 4 equal parts by taking the sum axis as a reference and again into 16 equal parts by taking the hue axis as a reference so as to provide 64 partial regions, and dividing the region S105 into 4 equal parts by taking the sum axis as a reference and again into 16 equal parts by taking the hue axis as a reference so as to provide 64 partial regions.

Preferably, the color space has the diff values ranging 0 to 255, the diff values are established as 6, 20, 60, and 110 to divide the color space along a diff axis, and the color space is divided into 5 regions S111 to S115 by taking the diff values as references, and wherein the color space is divided into 128 partial regions by dividing the region S111 into 16 equal parts by taking the sum axis as a reference so as to provide 16 partial regions, dividing the region S112 into 4 equal parts by taking the sum axis as a reference and again into 4 equal parts by taking the hue axis as a reference so as to provide 16 partial regions, dividing the region S113 into 4 equal parts by taking the sum axis as a reference and again into 8 equal parts by taking the hue axis as a reference so as to provide 32 partial regions, dividing the region S 114 into 4 equal parts by taking the sum axis as a reference and again into 8 equal parts by taking the hue axis as a reference so as to provide 32 partial regions, and dividing the region S115 into 4 equal parts by taking the sum axis as a reference and again into 8 equal parts by taking the hue axis as a reference so as to provide 32 partial regions.

Preferably, the color space has the diff values ranging 0 to 255, the diff values are established as 6, 20, 60, and 110 to divide the color space along a diff axis, and the color space is divided into 5 regions S121 to S125 by taking the diff values as references, and wherein the color space is divided into 64 partial regions by dividing the region S121 into 8 equal parts by taking the sum axis as a reference so as to provide 8 partial regions, dividing the region S122 into 4 equal parts by taking the sum axis as a reference and again into 4 equal parts by taking the hue axis as a reference so as to provide 16 partial regions, dividing the region S123 into 4 equal parts by taking the sum axis as a reference and again into 4 equal parts by taking the hue axis as a reference so as to provide 16 partial regions, dividing the region S124 into 2 equal parts by taking the sum axis as a reference and again into 8 equal parts by taking the hue axis as a reference so as to provide 16 partial regions, and dividing the region S125 into 8 equal parts by taking the hue axis as a reference so as to provide 8 partial regions.

Preferably, the color space has the diff values ranging 0 to 255, the diff values are established as 6, 60, and 110 to divide the color space along a diff axis, and the color space is divided into 4 regions S131 to S134 by taking the diff values as references, and wherein the color space is divided into 32 partial regions by dividing the region S131 into 8 equal parts by taking the sum axis as a reference so as to provide 8 partial regions, dividing the region S132 into 4 equal parts by taking the sum axis as a reference and again into 4 equal parts by taking the hue axis as a reference so as to provide 16 partial regions, dividing the region S133 into 4 equal parts by taking the hue axis as a reference so as to provide 4 partial regions, and dividing the region S 134 into 4 equal parts by taking the hue axis as a reference so as to provide 4 partial regions.

Preferably, the color space has the diff values ranging 0 to 255, the diff values are established as 9, 29, and 75 to divide the color space along a diff axis, and the color space is divided into 4 regions S41 to S44 by taking the diff values as references, and wherein the color space is divided into 32 partial regions by dividing the region S41 into 8 equal parts by taking the sum axis as a reference so as to provide 8 partial regions, dividing the region S42 into 2 equal parts by taking the sum axis as a reference and 4 equal parts again by taking the hue axis as a reference so as to provide 8 partial regions, dividing the region S43 into 4 equal parts by taking the sum axis as a reference and into 3 equal parts by taking the hue axis as a reference so as to provide 12 partial regions, and dividing the region S44 into 2 equal parts by taking the sum axis as a reference and 2 equal parts by taking the hue axis as a reference so as to provide 4 partial regions.

Preferably, the color space has the diff values ranging 0 to 255, the diff values are established as 9, 29, and 75 to divide the color space along a diff axis, and the color space is divided into 4 regions S51 to S54 by taking the diff values as references, and wherein the color space is divided into 64 partial regions by dividing the region S51 into 8 equal parts by taking the sum axis as a reference so as to provide 8 partial regions, dividing the region S52 into 4 equal parts by taking the sum axis as a reference and 4 equal parts by taking the hue axis as a reference so as to provide 16 partial regions, dividing the region S53 into 4 equal parts by taking the sum axis as a reference and 6 equal parts by taking the hue axis as a reference so as to provide 24 partial regions, and dividing the region S54 into 4 equal parts by taking the sum axis as a reference and 4 equal parts by taking the hue axis as a reference so as to provide 16 partial regions.

Preferably, the color space has the diff values ranging 0 to 255, the diff values are established as 9, 29, and 75 to divide the color space along a diff axis, and the color space is divided into 4 regions S61 to S64 by taking the diff values as references, and wherein the color space is divided into 120 partial regions by dividing the region S61 into 8 equal parts by taking the sum axis as a reference so as to provide 8 partial regions, dividing the region S62 into 4 equal parts by taking the sum axis as a reference and into 4 equal parts by taking the hue axis as a reference so as to provide 16 partial regions, dividing the region S63 into 4 equal parts by taking the sum axis as a reference and 12 equal parts by taking the hue axis as a reference so as to provide 48 partial regions, and dividing the region S64 into 4 equal parts by taking the sum axis as a reference and 12 equal parts by taking the hue axis as a reference so as to provide 48 partial regions.

Preferably, the color space has the diff values ranging 0 to 255, the diff values are established as 9, 29, 75, and 200 to divide the color space along a diff axis, and the color space is divided into 5 regions S71 to S75 by taking the diff values as references, and wherein the color space is divided into 184 partial regions by dividing the region S71 into 8 equal parts by taking the sum axis as a reference so as to provide 8 partial regions, dividing the region S72 into 4 equal parts by taking the sum axis as a reference and 8 equal parts by taking the hue axis as a reference so as to provide 32 partial regions, dividing the region S73 into 4 equal parts by taking the sum axis as a reference and 12 equal parts by taking the hue axis as a reference so as to provide 48 partial regions, dividing the region S74 into 4 equal parts by taking the sum axis as a reference and 12 equal parts by taking the hue axis as a reference so as to provide 48 partial regions, and dividing the region S75 into 2 equal parts by taking the sum axis as a reference and 24 equal parts by taking the hue axis as a reference so as to provide 48 partial regions.

In an image search system using color informations in an HMMD color space, embodiments of the invention also provide a color quantization method based on the HMMD color space comprising the steps of dividing the color space first by taking at least one designated diff value as a reference, and dividing the respective divided regions into $2^x$ equal parts by taking a sum axis as a reference and $2^y$ equal parts by taking the hue axis as a reference wherein x and y are integer.

Preferably, the color space has the diff values ranging 0 to 255 for a color quantization level of 256 after division, the designated diff values are 6, 20, 60, and 110 to divide the color space, and the color space is divided into 5 regions S101 to S 105, and wherein the color space is divided into 256 partial regions by dividing the region S101 into 32 equal parts by taking the sum axis as a reference so as to provide 32 partial regions, dividing the region S102 into 8 equal parts by taking the sum axis as a reference and 4 equal parts by taking the hue axis as a reference so as to provide 32 partial regions, dividing the region S103 into 4 equal parts by taking the sum axis as a reference and 16 equal parts by taking the hue axis as a reference so as to provide 64 partial regions, dividing the region S104 into 4 equal parts by taking the sum axis as a reference and 16 equal parts by taking the hue axis as a reference so as to provide 64 partial regions, and dividing the region S105 into 4 equal parts by taking the sum axis as a reference and 16 equal parts by taking the hue axis as a reference so as to provide 64 partial regions.

Preferably, the color space has the diff values ranging 0 to 255 for a color quantization level of 128 after division, the designated diff values are 6, 20, 60, and 110 to divide the color space, and the color space is divided into 5 regions S111 to S115, and wherein the color space is divided into 128 partial regions by dividing the region S111 into 16 equal parts by taking the sum axis as a reference so as to provide 16 partial regions, dividing the region S 112 into 4 equal parts by taking the sum axis as a reference and 4 equal parts by taking the hue axis as a reference so as to provide 16 partial regions, dividing the region S113 into 4 equal parts by taking the sum axis as a reference and 8 equal parts by taking the hue axis as a reference so as to provide 32 partial regions, dividing the region S114 into 4 equal parts by taking the sum axis as a reference and 8 equal parts by taking the hue axis as a reference so as to provide 32 partial regions, and dividing the region S115 into 4 equal parts by taking the sum axis as a reference and 8 equal parts by taking the hue axis as a reference so as to provide 32 partial regions.

Preferably, the color space has the diff values ranging 0 to 255 for a color quantization level of 64 after division, the designated diff values are 6, 20, 60, and 110 to divide the color space, and the color space is divided into 5 regions S121 to S125, and wherein the color space is divided into 64 partial regions by dividing the region S121 into 8 equal parts by taking the sum axis as a reference so as to provide 8 partial regions, dividing the region S122 into 4 equal parts by taking the sum axis as a reference and 4 equal parts by taking the hue axis as a reference so as to provide 16 partial regions, dividing the region S123 into 4 equal parts by taking the sum axis as a reference and 4 equal parts by taking the hue axis as a reference so as to provide 16 partial regions, dividing the region S124 into 2 equal parts by taking the sum axis as a reference and 8 equal parts by taking the hue axis as a reference so as to provide 16 partial regions, and dividing the region S125 into 8 equal parts by taking the hue axis as a reference so as to provide 8 partial regions.

Preferably, the color space has the diff values ranging 0 to 255 for a color quantization level of 32 after division, the designated diff values are 6, 60, and 110 to divide the color space, and the color space is divided into 5 regions S 131 to S 135, and wherein the color space is divided into 32 partial regions by dividing the region S 131 into 8 equal parts by taking the sum axis as a reference so as to provide 8 partial regions, dividing the region S 132 into 4 equal parts by taking the sum axis as a reference and 4 equal parts by taking the hue axis as a reference so as to provide 16 partial regions, dividing the region S 133 into 4 equal parts by taking the hue axis as a reference so as to provide 4 partial regions, and dividing the region S 134 into 4 equal parts by taking the hue axis as a reference so as to provide 4 partial regions.

In an image search system using color informations in a HMMD color space, embodiments of the invention also provide a color quantization method based on the HMMD color space comprising a step (a) of dividing the color space into a reference level by carrying out a color quantization of the reference level using diff, sum, and hue, and a step (b) of carrying out another color quantization of a larger level by subdividing at least one of the respective partial regions having been divided by the color quantization of the step (a) by taking at least one combination out of diff, sum, hue, min, and max as a reference.

Preferably, the reference of the color quantization level in the step (a) is 32, the diff values designated for dividing the color space into the reference level are 6, 60, and 110 respectively when a differential value diff ranges 0 to 255, and the color space is first divided into 4 partial regions S 131, S 132, S 133, and S 134 by the diff values, and wherein the color space is divided into 32 partial regions by dividing the region S 131 into 8 equal parts by taking the sum axis as a reference so as to provide 8 partial regions, dividing the region S 132 into 4 equal parts by taking the sum axis as a reference and 4 equal parts by taking the hue axis as a reference so as to provide 16 partial regions, dividing the region S 133 into 4 equal parts by taking the hue axis as a reference so as to provide 4 partial regions, and dividing the region S 134 into 4 equal parts by taking the hue axis as a reference so as to provide 4 partial regions.

Preferably, the color space is divided into 62 partial regions in the step (b) of carrying out the color quantization for a larger level by dividing the region S 132 into two partial regions S 132-1 and S 132-2 by taking the diff value of 20 as a reference, dividing the partial regions S 132-1 and S 132-2 into 4 equal parts respectively by taking the sum axis as a reference while the quadruply-divided hue axis in the step (a) remains as it is so as to provide 32 partial regions, maintaining the region S 131 having been divided into 8 equal parts in the step (a) by taking the sum axis as a reference, dividing the region S 133 into 2 equal parts by taking the sum axis as a reference and 8 equal parts by taking the hue axis as a reference so as to provide 16 partial regions, and dividing the region S 134 into 8 equal parts so as to provide 8 partial regions.

Preferably, the color space is divided into 128 partial regions in the step (b) of carrying out the color quantization for a larger level by dividing the region S 131 into 16 equal parts by taking the sum axis as a reference so as to provide 16 partial regions, maintaining the region S132-1 having been divided into 4 equal parts by taking the sum axis as a reference and 4 equal parts by taking the hue axis as a reference in 64-level, dividing the region S 132-2 into 8 equal parts instead of 4 equal parts in 64-level by taking the hue axis as a reference while maintaining the state that has been divided into 4 equal parts by taking the sum axis as a reference so as to provide 32 partial regions, dividing the region S 133 into 4 equal parts by taking the sum axis as a reference while maintaining the state that has been divided into 8 equal parts by taking the hue axis as a reference so as to provide 32 partial regions, and dividing the region S 134 into 4 equal parts by taking the sum axis as a reference while maintaining the state that has been divided into 8 equal parts by taking the hue axis as a reference so as to provide 32 partial regions.

Preferably, the color space is divided into 256 partial regions in the step (b) of carrying out the color quantization for a larger level by dividing the region S 131 into 32 equal parts by taking the sum axis as a reference so as to provide 32 partial regions, dividing the region S 132-1 into 8 equal parts by taking the sum axis as a reference while maintaining the state that has been divided into 4 equal parts by taking the hue axis as a reference so as to provide 32 partial regions, dividing the region S 132-2 into 16 equal parts by taking the hue axis as a reference while maintaining the state that has been divided into 4 equal parts by taking the sum axis as a reference so as to provide 64 partial regions, dividing the region S133 into 16 equal parts by taking the hue axis as a reference while maintaining the state that has been divided into 4 equal parts by taking the sum axis as a reference so as to provide 64 partial regions, and dividing the region S 134 into 16 equal parts by taking the hue axis as a reference while maintaining the state that has been divided into 4 equal parts by taking the sum axis as a reference so as to provide 64 partial regions.

Preferably, the step (b) of carrying out another color quantization of a larger level subdivides at least one of the respective regions, which have been divided by the color quantization of the step (a), into smaller partial regions by taking at least one combination out of diff, sum, hue, min, and max as a reference.

In an image search system using color informations in an HMMD color space, embodiments of the invention also provide a color quantization method based on the HMMD color space comprising a step (a) of dividing the color space into a reference level by carrying out a color quantization of the reference level using diff, sum, and hue, and a step (b) of carrying out another color quantization of a smaller level by merging at least one of the respective regions having been divided by the color quantization of the step (a).

Preferably, the reference of the color quantization level in the step (a) is 256, the diff values designated for dividing the color space into the reference level are 6, 20, 60, and 110 respectively when a differential value diff ranges 0 to 255, and the color space is first divided into 5 partial regions S101, S102, S103, S104, and S105 by the diff values, and wherein the color space is divided into 256 partial regions by dividing the region S101 into 32 equal parts by taking the sum axis as a reference so as to provide 32 partial regions, dividing the region S 102 into 8 equal parts by taking the sum axis as a reference and 4 equal parts by taking the hue axis as a reference so as to provide 32 partial regions, dividing the region S103 into 4 equal parts by taking the sum axis as a reference and 16 equal parts by taking the hue axis as a reference so as to provide 64 partial regions, dividing the region S104 into 4 equal parts by taking the sum axis as a reference and 16 equal parts by taking the hue axis as a reference so as to provide 64 partial regions, and dividing the region S105 into 4 equal parts by taking the sum axis as a reference and 16 equal parts by taking the hue axis as a reference so as to provide 64 partial regions.

Preferably, the color space is divided into 128 partial regions in the step (b) of carrying out the color quantization for a smaller level by dividing the region S101 into 16 equal parts by taking the sum axis as a reference so as to reduce a quantization level of the region to 16 levels, dividing the region S102 into 4 equal parts by taking the sum axis as a reference while maintaining the state that has been divided into 4 equal parts by taking the hue axis as a reference so as to reduce a quantization level of the region S102 to 16 levels, dividing the region S103 into 8 equal parts by taking the hue axis as a reference while maintaining the state that has been divided into 4 equal parts by taking the sum axis as a reference so as to reduce a quantization level of the region S103 to 32 levels, dividing the regions S104 into 8 equal parts by taking the sum axis as a reference while maintaining the state that has been divided into 4 equal parts by taking the sum axis as a reference so as to reduce a quantization level of the region S104 to 32 levels, and dividing the region S105 into 8 equal parts by taking the hue axis as a reference while maintaining the state that has been divided into 4 equal parts by taking the sum axis as a reference so as to reduce a quantization level of the region S105 to 32 levels.

Preferably, the color space is divided into 64 partial regions in the step (b) of carrying out the color quantization for a smaller level by dividing the region S101 into 8 equal parts by taking the sum axis as a reference so as to reduce a quantization level of the region S101 to 8 levels, maintaining the region S102 that has been divided into 4 equal parts by taking the sum axis as a reference and 4 equal parts by taking the hue axis as a reference, dividing the region S103 into 4 equal parts by taking the hue axis as a reference while maintaining the state that has been divided into 4 equal parts by taking the sum axis as a reference so as to reduce a quantization level of the region S103 to 16 levels, dividing the region S 104 into 2 equal parts by taking the sum axis as a reference while maintaining the state that has been divided into 8 equal parts by taking the hue axis as a reference so as to reduce a quantization level of the region S 104 to 16 levels, and dividing the region S105 into 1 equal part by taking the sum axis as a reference while maintaining the state that has been divided into 8 equal parts by taking the hue axis as a reference so as to reduce a quantization level of the region S105 to 8 levels.

Preferably, the color space is divided into 32 partial regions in the step (b) of carrying out the color quantization for a smaller level by maintaining the region S101 that has been divided into 8 equal parts by taking the sum axis as a reference, merging the region S102 and the region S103 in a merged region, dividing the merged region into 2 equal parts by taking the sum axis as a reference while maintaining the state that has been divided into 4 equal parts by taking the hue axis as a reference so as to reduce a quantization level of the merged region to 8 levels, dividing the region S104 into 4 equal parts by taking the hue axis as a reference while maintaining the state that has been divided into 1 equal part by taking the sum axis as a reference so as to reduce a quantization level of the region S 104 to 4 levels, and dividing the region S105 into 4 equal parts by taking the hue axis as a reference while maintaining the state that has been divided into 1 equal part by taking the sum axis as a reference so as to reduce a quantization level of the region S105 to 4 levels.

Embodiments of the invention also provide a multimedia search method using color features quantized by a color quantization method for different levels comprising a step (a) of mapping meanings of color labels of two features produced by different quantization methods by mapping the color label of the feature produced by the quantization method for a large level to one of the color labels produced by the quantization method for a small level, a step (b) of measuring similarity using the mapped color label, and a step (c) of outputting multimedia data by taking the measured similarity as a reference.

Preferably, the mapped color label, in the step (a), is determined provided that an arbitrary point at the corresponding partial regions of the color label produced by the quantization method for a large level is included in one of the respective regions corresponding to the color labels produced by the quantization method for a small level to be mapped.

Preferably, the color label mapping in the step (a) is executed at a time point initiating to compare the similarity of two initial data, wherein a mapping relation of the color labels according to the two quantization methods is stored as a table for and the like, and wherein the stored relation table information is used for following data without further execution of another color label mapping.

## Claims

1. A multimedia search method using color histogram for an image, the method comprising:

    inputting images;
    quantizing a converted HMMD color values of each input image by a quantization method;
    building a color histogram for each input image;
    mapping the color label of the color histogram produced by the quantization method for a larger level to one of the color labels of the color histogram produced by the quantization method for a smaller level in order to measure similarity between the color histogram of a reference image and the color histogram for each input image; and
    arranging input images according to the measured similarity.

2. The method of claim 1, wherein a mapped color label, is determined provided that an arbitrary point at the corresponding spatial regions of the color label produced by the quantization method for a larger number of levels is included in one of the respective spatial regions corresponding to the color labels produced by the quantization method for a smaller number of levels to be mapped.

3. The method of claim 1, wherein the step of mapping the color label is executed at a time point initiating to compare the similarity of two images, wherein a mapping relationship of the color labels according to the quantization methods for different level is stored as relation table information and wherein the stored relation table information is used for following data without further execution of another color label mapping.

# FIG. 1
# Related Art

# FIG. 2
# Related Art

# FIG. 3

# FIG. 4

## FIG. 5

## FIG. 6

# FIG. 7

## FIG. 8

# FIG. 9

```
        ( start )
            │
            ▼
┌─────────────────────────┐
│  begin label mapping of │
│  color histograms H1, H2│
└─────────────────────────┘
            │
            ▼
       ╱◇◇◇◇◇◇╲
      quantization            No
   level number of H1 > ──────────────┐
    quantization level                │
       number of                      │
         H2?                          │
       ╲◇◇◇◇◇◇╱                       │
          │ Yes                       │
          ▼                           ▼
┌──────────────────────┐   ┌──────────────────────┐
│  mapping candidate =  │   │  mapping candidate =  │
│  divided spaces of H1 │   │  divided spaces of H2 │
└──────────────────────┘   └──────────────────────┘
          │                           │
          ▼                           ▼
┌──────────────────────┐   ┌──────────────────────┐
│  mapping candidate =  │   │  mapping candidate =  │
│  divided spaces of H2 │   │  divided spaces of H1 │
└──────────────────────┘   └──────────────────────┘
          │                           │
          │◄──────────────────────────┘
          ▼
┌────────────────────────────────────────┐
│  obtaining what region in the divided   │
│  regions of a mapping candidate an      │
│  arvitrary point in the respective      │
│  divisional spaces of all divisional spaces │
│  included in mapping targets belongs to, │
│  which is transformed into a divided region │
│  label of the corresponding mapping candidate │
└────────────────────────────────────────┘
          │
          ▼
       ( end )
```

## FIG. 10A

## FIG. 10B

# FIG. 11

|  | conventional linear quantization | present invention |
|---|---|---|
| 32 level |  | 0.133983 |
| 64 level | 0.122193 | 0.082306 |
| 120 level |  | 0.060953 |
| 184 level |  | 0.060956 |

# FIG. 12

| reference image level | target image level | result |
|---|---|---|
| 184 | 120 | 0.063277 |
| 184 | 64 | 0.085529 |
| 120 | 184 | 0.062502 |
| 120 | 64 | 0.085862 |
| 64 | 184 | 0.081473 |
| 64 | 120 | 0.087782 |

## FIG. 13

## FIG. 14

# FIG. 15

# FIG. 16

# FIG. 17

|  | conventional linear quantization | present invention |
|---|---|---|
| 32 level |  | 0.106949 |
| 64 level | 0.122193 | 0.053468 |
| 128 level |  | 0.041422 |
| 256 level |  | 0.034877 |

# FIG. 18

| reference image level | target image level | result |
|---|---|---|
| 256 | 128 | 0.042040 |
| 256 | 64 | 0.053656 |
| 128 | 256 | 0.040127 |
| 128 | 64 | 0.053833 |
| 64 | 256 | not experiment |
| 64 | 128 | 0.053662 |